# EUROPEAN PATENT APPLICATION

(11) **EP 2 312 827 A2**
(43) Date of publication of application: **20.04.2011**
(21) Application number: 10175808.4
(22) Date of filing: 08.09.2010
(51) Int. Cl.: H04N 5/04

(54) **Content outputting apparatus, method and system**

(30) Priority: 19.10.2009 KR 20090099255
(71) Applicant: Samsung Electronics Co., Ltd., Suwon-si, Gyeonggi-do (KR)
(72) Inventor: Park, Chul-jun, Suwon-shi, Gyeonggi-do (KR)
(74) Representative: Walaski, Jan Filip

(57) **Abstract**

A contents output apparatus, method, and system are provided. The present apparatus includes an output unit to output contents, a transmission unit to transmit contents to an external apparatus, and a control unit to control when the contents are output from the output unit. Accordingly, as broadcasting timing is adjusted in a restricted area, audio and/or video is synchronized between the contents output apparatus and the external apparatus.

## Description

The present invention relates to a display apparatus, a display method, and a display system, and more particularly, to a display apparatus which receives broadcasting in a restricted area, re-transmits the broadcasting to an external apparatus, and performs audio/video synchronization with the external apparatus that outputs the received broadcasting, and a display method and a display system thereof.

Related art broadcasting reception devices are limited to receiving broadcasting from outside and outputting the received broadcasting, and thus audio/video synchronization is considered only between a broadcasting reception device and an output device connected to the broadcasting reception device. That is, if an audio stream output from a broadcasting reception device such as a TV is output through an audio output device such as a speaker and a video stream is output through an video output device such as a screen, unmatched audio/video synchronization needs to be addressed. Since a related art TV/set top box STB is used only in a designated area, the usability of such a device has been limited.

Recently, with the advent of an IPTV thanks to the development of wireless communication technology, it has become possible to share broadcasting even from distant areas. Accordingly, a broadcasting reception device such as a digital TV (DTV) not only outputs received broadcasting but also re-transmits the received broadcasting to an external apparatus, and the external apparatus may output the received broadcasting and provide it to a user.

However, broadcasting timing may be delayed in the process of re-transmitting broadcasting from the TV to the external apparatus, causing unmatched audio/video synchronization. If the program broadcast on the TV is different from the broadcast on the external apparatus, or the area in which the program is broadcast on the TV is far enough from the area in which the program is broadcast on the external apparatus so as to not cause any interference, there is no problem. However, in most cases, the above function is used in a short distance, such as within a home. If a user watches the same broadcasting within a home using the TV and the external apparatus, unmatched synchronization is caused between the TV and the external apparatus, and thus a user may be inconvenienced.

One or more exemplary embodiments relate to a broadcasting reception device capable of synchronizing the timing of outputting broadcasting from the broadcasting reception device with the timing of outputting broadcasting from an external apparatus which outputs the broadcasting received from the broadcasting reception device, and a display method and a display system thereof.

A display apparatus, according to an exemplary embodiment, includes an output unit that outputs contents, a transmission unit that transmits the contents to an external apparatus so that the contents are output in the external apparatus, and a control unit that adjusts the timing at which the contents are output from the output unit based on a user's command.

The output unit may display an OSD to adjust the timing at which the contents are output, and the control unit may control the timing at which the contents are output from the output unit based on a user's command using the OSD.

The external apparatus may receive the contents from the display apparatus and output them. The contents may be output from the output unit at a different time than the contents are output from the external apparatus.

The control unit may adjust the timing at which the contents are output from the output unit based on a user's command which considers the timing at which the contents are output from the external apparatus.

The control unit may adjust the timing at which contents are output from the output unit so that the time between outputting contents from the output unit and from the external apparatus is within a predetermined time period.

The display apparatus, according to an exemplary embodiment, may further include an input unit that receives a user's command through a remote controller for manipulating the display apparatus, and the user's command may be transmitted from the remote controller to the display apparatus according to a user's manipulation input through an OSD displayed on a screen of the remote controller.

The display apparatus, according to an exemplary embodiment, may further include a buffering unit that buffers the contents in order to adjust the timing, and the control unit may control the buffering unit based on the user's command so as to adjust the timing.

A method for displaying contents through a display apparatus, according to an exemplary embodiment, may include reproducing contents, transmitting the contents to an external apparatus so that the contents are output from the external apparatus, and adjusting the timing of outputting the contents and outputting them based on a user's command.

The method, according to an exemplary embodiment, may further include displaying an OSD to adjust the timing at which the contents are output, and the outputting may control the timing at which the contents are output based on a user's command using the OSD.

The external apparatus may output the received contents, and the timing at which the contents are output from the display apparatus may be different from the timing at which the contents are output from the external apparatus.

The timing at which the contents are output may be adjusted based on a user's command which considers the timing at which the contents are output from the external apparatus.

The timing at which contents are output may be adjusted so that the time between outputting the contents from the output unit and from the external apparatus is within a predetermined time period.

The timing at which the contents are output may be adjusted based on a user's command received from a remote controller for manipulating the display apparatus, and the user's command may be transmitted from the remote controller to the display apparatus according to a user's manipulation input through an OSD displayed on a screen of the remote controller.

The timing at which the contents are output may be adjusted by buffering the contents and outputting the contents.

A display system, according to an exemplary embodiment, may include a first display apparatus which outputs contents, displays an OSD for adjusting the timing at which the contents are output, adjusts the timing based on a user's command using the OSD, and transmits the contents to an external apparatus, and a second display apparatus which displays the contents received from the first display apparatus, and the timing at which the contents are output from the first display apparatus may be adjusted considering the timing at which the contents are output from the second display apparatus.

Embodiments of the invention will now be described by way of example with reference to the accompanying drawings, in which:
FIG. 1 is a view illustrating a display system according to an exemplary embodiment;
FIG. 2 is a block diagram illustrating the configuration of a broadcasting reception device 300 according to an exemplary embodiment;
FIG. 3 is a view illustrating the configuration of an OSD according to an exemplary embodiment; and
FIG. 4 is a flow chart illustrating a display method according to an exemplary embodiment.

Reference will now be made in detail to the exemplary embodiments, which are illustrated in the accompanying drawings, wherein like reference numerals refer to like elements throughout. The exemplary embodiments are described below, with reference to the figures.

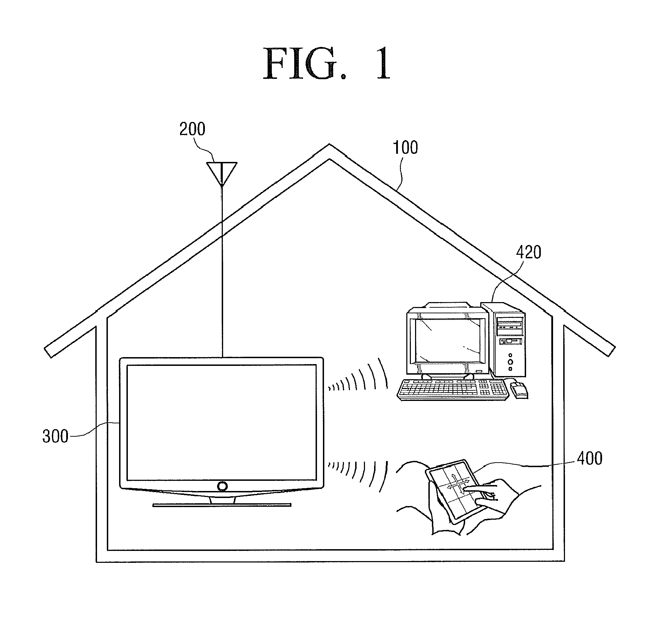

FIG. 1 is a view illustrating a display system according to an exemplary embodiment. According to the display system 100, the timing at which the broadcasting reception device 300 displays received broadcasting may be synchronized with the timing that an external apparatus displays the broadcasting received from the broadcasting reception device 300.

The broadcasting reception device 300 receives broadcasting through an antenna 200 and displays the broadcasting. Examples of the broadcasting reception device include a digital TV, a hub-TV, and a set-top box. The broadcasting reception device 300 displays a broadcasting signal in a digital format which is received through the antenna 200 and selected through a tuner.

In addition, the broadcasting reception device 300 re-transmits the received broadcasting to an external apparatus. Specifically, the broadcasting reception device 300 re-transmits a broadcasting signal received to the external apparatus according to a user input, or when the external apparatus requests broadcasting.

The external apparatus receives broadcasting re-transmitted from the broadcasting reception device 300 and outputs the received broadcasting. FIG. 1 illustrates a media planner 400 (MP) and a personal computer 420 (PC) as an example of an external apparatus.

The MP 400 inputs a command to manipulate a broadcasting reception device 300 or generates contents downloaded from the broadcasting reception device 300.

The PC 420 is a device which processes a user command input through an input apparatus such as a keyboard and displays the processed command through an output apparatus such as a monitor. PC 420 not only performs its original function of processing a user command but also performs an additional function of outputting broadcasting re-transmitted from the broadcasting reception device 300 on a monitor and providing it to a user.

In the above explanation, the MP 400 and the PC 420 have been described as examples of an external apparatus for convenience of explanation, but this is only an example. The exemplary embodiments are not limited to the MP 400 and the PC 420, and the technical feature of the exemplary embodiment may be applied to any apparatus which is capable of receiving a signal from outside and displaying it. Accordingly, a portable multimedia player (PMP), a notebook, a mobile phone, or an MP3 may be used as an external apparatus.

Since the broadcasting timing is delayed while it is re-transmitted from the broadcasting reception device 300 to an external apparatus such as the MP 400 and the PC 420, when the external apparatus outputs the broadcasting re-transmitted from the broadcasting reception device 300, the audio/video may not be synchronized between the broadcasting that the broadcasting reception device displays and the broadcasting that the external apparatus displays.

In this case, the display timing may be adjusted arbitrarily in the broadcasting reception device 300 in order to synchronize the display timing of the broadcasting reception device 300 with the display timing of the external apparatus such as the MP 400 and the PC 420, which displays the broadcasting re-transmitted from the broadcasting reception device 300. Therefore, audio and video may be prevented from being output with time intervals when a user views the same broadcasting through each display apparatus in a restricted area.

The method for adjusting a display timing according to an exemplary embodiment will be described later.

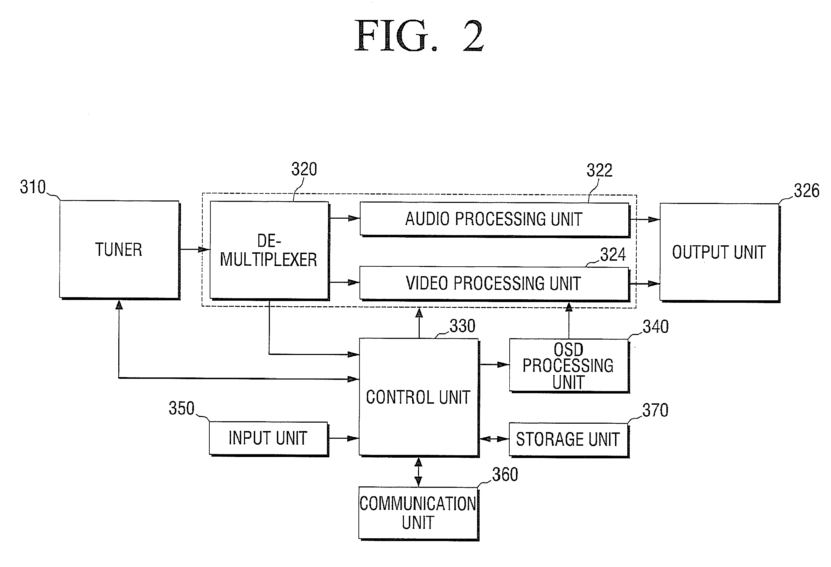

FIG. 2 is a block diagram illustrating the configuration of the broadcasting reception device 300 according to an exemplary embodiment.

According to FIG. 2, the broadcasting reception device 300 includes a tuner 310, a de-multiplexer 320, an audio processing unit 322, a video processing unit 324, an output unit 326, a control unit 330, an OSD processing unit 340, an input unit 350, a communication unit 360, and a storage unit 370.

The tuner 310 selects a broadcasting channel received through air or cable by wired or wireless communication. Specifically, the tuner 310 sets a certain channel from among a plurality of channels as an input channel, receives the broadcasting signal of the channel set as the input channel from the antenna 200 and provides the received broadcasting signal to the de-multiplexer 320.

Since the tuner 310 may include more than one tuner, it is possible to tune a plurality of broadcasting signals through a plurality of tuners. In this case, each broadcasting signal may be transmitted to a plurality of external apparatuses.

The de-multiplexer 320 outputs a broadcasting signal output from the tuner 310 by dividing it into an audio signal and a video signal. The audio signal and the video signal divided from the broadcasting signal are applied to the audio processing unit 322 and the video processing unit 324 respectively and are used to display the broadcasting signal.

The audio processing unit 322 decodes an audio signal divided from the de-multiplexer 320, converts it into an audio signal in a format which can be output by an output unit, and provides it to the output unit 326.

The video processing unit 324 decodes a video signal divided from the de-multiplexer 320, converts it into a video signal in a format which can be output in by output unit, and provides it to the output unit 326.

The output unit 326 outputs the audio signal and the video signal provided from the audio processing unit 322 and video processing unit 324 respectively. Specifically, the output unit 326 comprises an audio output unit (not shown) and a video output unit (not shown) and outputs the provided audio and video signal.

The input unit 350 generates an input command by a user's manipulation and provides it to the control unit 330. In an exemplary embodiment, a signal input to the input unit 350 may be a signal that a user inputs through a keypad which is integrated with the main body of the broadcasting reception device 300, or a signal input through a remote controller which is separated from the main body of the broadcasting reception device 300.

The input signal includes a signal to change an input channel, a signal to adjust volume of the output unit 326, a signal to control power on/off of the broadcasting reception device 300, a signal to request display of an OSD menu, a signal input from a user through the OSD menu, and a signal adjusted by an external remote controller and so on.

The control unit 330 outputs a control signal that controls the tuner 310, the audio processing unit 322, the video processing unit 324, the OSD processing unit 340, the communication unit 360, and the storage unit 370 in response to an input signal received from the input unit 350.

In addition, the control unit 330 controls the communication unit 360 to transmit a broadcasting signal received from the antenna 200 to an external apparatus. In this case, the signal to be transmitted to the external apparatus may be generated by a user's command input through the input unit 350 or a request by the external apparatus.

If a signal to request an OSD menu is input by a user's command through the input unit 350, the control unit 330 controls the OSD processing unit 340 to generate the signal to request an OSD menu and the OSD processing unit 340 provides the signal to request an OSD menu to the video processing unit 324. Subsequently, the video processing unit 324 provides the signal to output an OSD menu to the output unit 326 so that the output unit 326 outputs an OSD menu.

The control unit 330 generates a signal to request an OSD menu not only by a user's command but also by other ways. Specifically, if the broadcasting being received through the antenna 200 is re-transmitted to an external apparatus, or there is a request to transmit a broadcasting signal from an external apparatus, the OSD processing unit 340 may also be controlled to display an OSD menu even if a signal to request an OSD menu is not received by a user through the input unit 350.

A signal not to display an OSD menu may be input by a user through the input unit 350. In this case, the control unit 330 does not generate a signal to control the OSD processing unit 340.

The control unit 330 adjusts the audio processing unit 322 and the video processing unit 324 according to a signal to adjust display timing input by a user's command through the input unit so as to adjust the display timing of broadcasting output from the output unit 326.

Specifically, if a command to delay the display timing of broadcasting is input from the input unit 350, the control unit 330 controls the audio processing unit 322 and the video processing unit 324 to delay the display timing of broadcasting output from the output unit 326. Alternatively, a command to advance, stop, or pause the display timing of broadcasting may be input. In this case, the control unit 330 controls the audio processing unit 322 and the video processing unit 324 to advance, stop or pause the display timing of broadcasting according to each command.

As described above, the control unit 330 may control the audio processing unit 322 and the video processing unit 324 after receiving a signal input by a user through an OSD menu from the input unit 350, and may also control the audio processing unit 322 and the video processing unit 324 after receiving a user's command through the manipulation of an external remote controller from the input unit 350.

The OSD menu may be displayed in the broadcasting reception device 300 or in an external remote controller. If the OSD menu is displayed in the broadcasting reception unit 300, the control unit 330 may control display timing in response to a corresponding command as described above. If the OSD menu is displayed in an external remote controller, a user's command is input to the input unit 350 through an OSD displayed in the external remote controller and the control unit 330 may control display timing in response to the input signal.

The control unit 330 may adjust the time difference between the broadcasting output from the broadcasting reception device 300 and the broadcasting output from an external apparatus so that the time difference is within a predetermined time period. In this case, the predetermined time period may be defined such that the timing of the broadcasting output from the broadcasting reception device 300 and the timing of the broadcasting output from the external apparatus is almost the same.

When the display timing is adjusted, the time intervals may be set in advance, or a user may set them arbitrarily. For instance, the display timing may be delayed every 3, 5, or 10 seconds by a user command according to the preset time intervals, or the user may set the time intervals arbitrarily.

The broadcasting reception device 300 includes the storage unit 370 to store transmitted broadcasting. If a signal to change a display timing of broadcasting is input by a user's command, the storage unit 370 has a buffering function to adjust the display timing under the control of the control unit 330. Accordingly, the storage unit 370 may be referred to as a buffering unit.

The communication unit 360 transmits a broadcasting signal received from the antenna 200 to an external apparatus under the control of the control unit 330. In this case, not only when a signal to transmit a broadcasting signal to an external apparatus is input from the input unit 350, but also when a request for transmitting a broadcasting signal to an external apparatus is received from outside, the control unit 330 controls the communication unit 360 to re-transmit the broadcasting to the external apparatus.

In this case, it is desirable to transmit a broadcasting signal received from the tuner 310 to an external apparatus in an encoded state since if decoded audio signal and video signal are transmitted to an external apparatus when the broadcasting re-transmitted from the broadcasting reception device 300 is output from the external apparatus, the signals may be adjusted again for synchronization in the external apparatus. However, the broadcasting signal re-transmitted from the broadcasting reception device 300 to the external apparatus may be a de-multiplexed signal or not be a de-multiplexed signal.

The external apparatus which received the broadcasting signal re-transmitted from the broadcasting reception device 300 may decode the received broadcasting signal and display it.

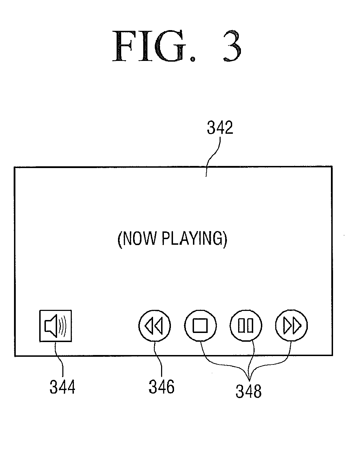

FIG. 3 is a view illustrating the configuration of an OSD according to an exemplary embodiment.

As illustrated in FIG. 3, the OSD includes a volume control icon 344, an icon 346 to delay display timing, and an icon 348 to adjust display timing. Specifically, the volume control icon 344 indicates a volume level of broadcasting currently being displayed and may adjust the volume according to a user's command input from the input unit 330. The icon 346 to delay display timing may delay the timing of broadcasting displayed in the output unit 326 according to a user's command input from the input unit 330.

In general, the broadcasting displayed in the broadcasting reception device 300 which re-transmits received broadcasting to an external apparatus may be faster than the broadcasting displayed in the external apparatus which receives the re-transmitted broadcasting.

Since it is possible for the broadcasting reception device 300 to receive broadcasting re-transmitted from a separate broadcasting reception device and output it, various timing control icons 348 such as an icon to stop displaying, an icon to pause displaying, and an icon to accelerate timing may be included. Such icons may be used to adjust timing effectively.

An icon to adjust timing and time intervals of displayed broadcasting may be formed. For instance, time intervals of 3, 5, and 10 seconds may be preset and each icon for the time intervals may exist. Accordingly, the timing may be adjusted by receiving a user's command, or the user may input time intervals arbitrarily.

In addition to the configuration illustrated in FIG. 3, other methods of adjusting the timing of audio and video individually may be used. Specifically, an icon to adjust only the timing of displayed video, an icon to adjust only the timing of output audio, and an icon to adjust both may be displayed.

The method of displaying an OSD menu 342 in the output unit 326 may be preset or may be set by a user. Specifically, the OSD menu may be displayed overlapping with the broadcasting currently displayed in the output unit 326 or may be displayed in a pop-up window. In order to relieve a viewer's inconvenience, an OSD menu is displayed in an area outside the area in which broadcasting is currently being displayed, or the size of the area in which broadcasting is displayed may be adjusted so that the OSD menu is displayed appropriately.

The input unit 350 may receive a user's command through an OSD menu displayed by a video output unit of the broadcasting reception device 300 or may receive a user's command through an external remote controller. If a user's command is received through an external remote controller, the OSD menu illustrated in FIG. 3 may not necessarily be displayed in a video output unit of the broadcasting reception device 300 and may be displayed in the external remote controller.

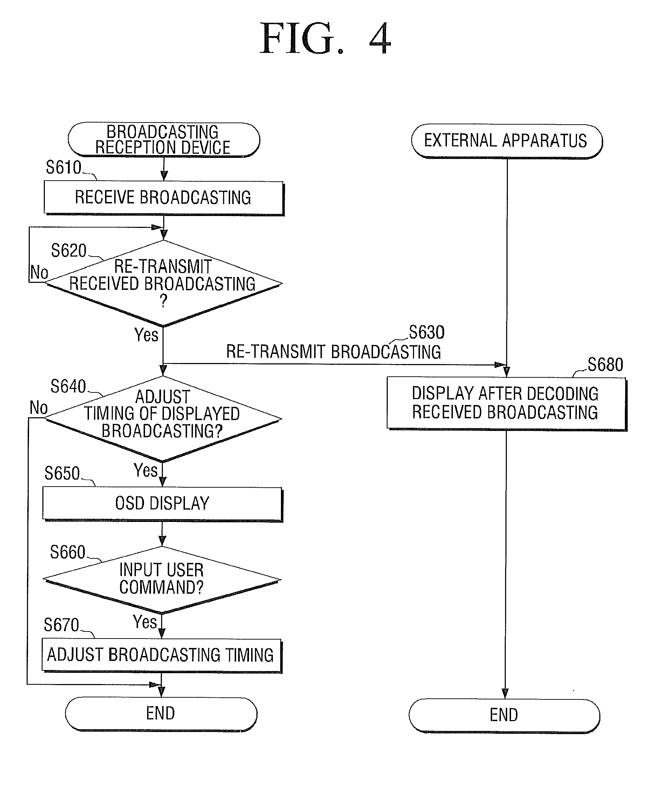

FIG. 4 is a flow chart illustrating a display method according to an exemplary embodiment. The process of adjusting display timing of broadcasting received by the broadcasting reception device 300 will be described in detail with reference to FIG. 4.

The broadcasting reception device 300 receives a broadcasting signal from the antenna 200 (S610).

Then, it is determined whether a signal to re-transmit the received broadcasting to an external apparatus is received through the input unit 350 (S620).

If a signal to re-transmit the received broadcasting to an external apparatus is received (S620-Y), the control unit 330 provides the communication unit 360 with a control signal to re-transmit the broadcasting signal and the communication unit 360 transmits the broadcasting signal stored in the storage unit 370 to the external apparatus (S630).

The external apparatus which receives the broadcasting re-transmitted from the broadcasting reception device 300 decodes the received broadcasting and outputs it (S680).

The broadcasting reception device 300 determines whether an OSD menu request signal is input from a user through the input unit 350 to adjust broadcasting timing (S640).

If the OSD menu request signal is input (S640-Y), the control unit 330 controls the OSD processing unit 340 to generate an OSD menu output signal. The OSD processing unit 340 provides the generated signal to the video processing unit 324 so that the output unit 326 outputs the OSD menu (S650).

If the OSD menu request signal is not input by a user (S640-N), broadcasting currently being received is output without adjusting the display timing. If a signal not to output an OSD menu is input, broadcasting currently being received may also be output.

If a signal to adjust display timing is input through the input unit 350, the control unit 330 may generate a signal to adjust timing according to the signal.

Specifically, if a command to delay display timing is input, the control unit 330 generates a signal to delay the broadcasting timing. If a command to stop or pause broadcasting, a signal to stop or pause broadcasting is generated (S660).

The control unit 330 provides the generated signal to the audio processing unit 322 and the video processing unit 324. Subsequently, the audio processing unit 322 and the video processing unit 324 delay, stop or pause broadcasting according to the received signal so that the broadcasting timing output from the output unit 326 is adjusted (S670).

In the above description, the broadcasting received through the broadcasting reception device 300 is re-transmitted to an external apparatus, but this is only an example. The technical feature of the exemplary embodiment may also be applied when contents reproduced in one display apparatus (hereinbelow, referred to as 'the first display apparatus') is transmitted to another display apparatus (hereinbelow, referred to as 'the second display apparatus') and reproduced.

For instance, if the first display apparatus is a lap-top computer and the second display apparatus is a TV, a DVD image reproduced in the lap-top computer is transmitted to the TV and the timing at which the DVD image is reproduced in the TV may be adjusted to be consistent with the timing at which the DVD image is reproduced in the lap-top computer.

In the above description, the broadcasting received through the broadcasting reception device 300 is re-transmitted to an external apparatus, and the broadcasting output from the broadcasting reception device 300 and the broadcasting output from the external apparatus are synchronized. The broadcasting may include audio and video components.

The above exemplary embodiment is only an example, the broadcasting reception device 300 and the external apparatus may synchronize only video output or only audio output from the broadcasting reception device 300 and the external apparatus.

Such synchronization may be changed according to a user's setting, and the user may control the output timing of audio and video through a separate OSD. For instance, in FIG. 3, the OSD to adjust the output timing of audio is displayed on the screen, but a separate OSD to adjust the output timing of video may be displayed on the screen, or the output timing of video and audio may be adjust through a single OSD.

According to an exemplary embodiment, it is possible to adjust broadcasting output timing so as to synchronize the audio/video of the external apparatus with the audio/video of the broadcasting reception device which re-transmits broadcasting to the external apparatus. Accordingly, a user's inconvenience due to unmatched audio/video synchronization when the user views broadcasting in a short distance such as in the inside of a house may be prevented.

Although a few exemplary embodiments have been shown and described, it would be appreciated by those skilled in the art that changes may be made to these embodiments without departing from the principles of the invention, the scope of which is defined in the claims.

## Claims

1. A display apparatus, comprising:
an output unit to output contents;
a transmission unit to transmit the contents to an external apparatus so that the contents are output in the external apparatus; and
a control unit to adjust when the contents are output from the output unit based on a user's command.

2. The display apparatus according to claim 1, wherein the output unit displays an on-screen display (OSD) to adjust when the contents are output, and
the control unit controls when the contents are output from the output unit based on a user's command input using the OSD.

3. The display apparatus according to claim 1 or 2, wherein the external apparatus receives the contents from the display apparatus and outputs the contents at a time that is different than when the display apparatus outputs the contents.

4. The display apparatus according to any one of the preceding claims, wherein the control unit adjusts when the contents are output from the output unit based on a user's command which considers when the contents are output from the external apparatus.

5. The display apparatus according to claim 4, wherein the control unit adjusts when contents are output from the output unit so that a difference in when the contents are output from the output unit and when the contents are output from the external apparatus is within a predetermined time period.

6. The display apparatus according to any one of the preceding claims, further comprising:
an input unit to receive a user's command through a remote controller for manipulating the display apparatus,
wherein the user's command is transmitted from the remote controller to the display apparatus according to a user's manipulation input through an OSD displayed on a screen of the remote controller.

7. The display apparatus according to any one of the preceding claims, further comprising:
a buffering unit to buffer the contents in order to adjust the timing,
wherein the control unit controls the buffering unit based on the user's command so as to adjust the timing.

8. A method for displaying contents through a display apparatus, comprising:
reproducing contents;
transmitting the contents to an external apparatus so that the contents are output from the external apparatus; and
adjusting when the contents are output and outputting the contents based on a user's command.

9. The method according to claim 8, further comprising:
displaying an on-screen display (OSD) to adjust when the contents are output,
wherein the outputting controls when the contents are output based on a user's command using the OSD.

10. The method according to claim 8 or 9, wherein the external apparatus outputs the received contents at a different time than when the contents are output from the display apparatus.

11. The method according to any one of claims 8 to 10, wherein the outputting adjusts when the contents are output from the display apparatus based on a user's command which considers when the contents are output from the external apparatus.

12. The method according to claim 11, wherein the outputting adjusts when the contents are output from the output unit so that a difference in a first time at which the contents are output from the output unit and a second time at which the contents are output from the external apparatus is within a predetermined time period.

13. The method according to any one of claims 8 to 12, wherein the outputting adjusts when the contents are output from the output unit and outputs the contents from the output unit based on a user's command received from a remote controller for manipulating the display apparatus, and
the user's command is transmitted from the remote controller to the display apparatus according to a user's manipulation input through an OSD displayed on a screen of the remote controller.

14. The method according to any one of claims 8 to 13, wherein the outputting adjusts when the contents are output by buffering the contents and outputs the contents.
